# EUROPEAN PATENT APPLICATION

(11) **EP 0 596 158 A1**
(43) Date of publication of application: **11.05.1994**
(21) Application number: 92203387.3
(22) Date of filing: 05.11.1992
(51) Int. Cl.: H04M 1/00

(54) **Digital telephone set with a plurality of interconnected circuit modules**

(71) Applicant: ALCATEL BELL Naamloze Vennootschap, B-2018 Antwerpen 1 (BE); ALCATEL N.V., NL-2288 BH Rijswijk (NL)
(72) Inventor: Ryckebusch, Frank, B-2070 Ekeren (BE); Moerman, Erik, B-9820 Bottelare (BE); Haspeslagh, Johan Joseph Gustaaf, B-3001 Heverlee (BE)

(57) **Abstract**

A digital telephone set including a transmission circuit (DPI) integrated in an electronic chip. The transmission circuit includes a plurality of interconnected circuit modules (CODEC, DTMF, TCF, TEKO, GCI) each performing a specific telephonic operation on telephonic information data, a microprocessor (MP) controlling these modules and a common information data bus (TDB) to which the modules are connected and which carries the data in Time Division Multiplexed (TDM) channels of time frames (FRM/FR). The channels wherein each module is allowed to write/read are allocated by the microprocessor via a control data bus (MPB) and each module includes input/output means (10) adapted to perform the read/write operation on the allocated channels. By changing the channels allocated to each module, the configuration, i.e. the interconnection, of these modules may be changed so that they can be seen as connected in series, in parallel or in series/parallel. Furthermore, a module is deactivated when no channel is allocated thereto.

## Description

The present invention relates to a digital telephone set including a plurality of interconnected circuit modules each performing a specific telephonic operation on telephonic information data.

Such a digital telephone set is already known in the art. This is for instance the case of the "Venturer 2600" telephone set of ALCATEL (TM) described in the article "Le poste telephonique numerique pour la transmission de la parole et de donnees" by M. Montrieux et al, published in the "Technology Transfer Express" of June 1987. This known digital telephone set includes different circuit modules such as a dual tone multi-frequencies generator for generating selection signals, an audio circuit for handling voice signals, a Pulse Coded Modulation (PCM) transcoder for translating compressed PCM words in linear PCM words, an echo canceller for allowing "hands-free" operations, a data terminal adapter for handling data signals, a line interface, etc ... These circuit modules are so interconnected that the telephonic information data, i.e. voice, data and control signals, may be simultaneously transmitted to and received from a same telecommunication line. This telephone set is used in an Integrated Service Digital Network (ISDN) and the telephonic information data signals thereof are transmitted on the telecommunication line as follows: two B-channels at 64 kbit/s are used for voice and data signals and one D-channel at 16 kbit/s is used for control signals, i.e. signalling. In more detail, this digital telephone set uses one B-channel for voice signals and the other B-channel for data signals.

Although the internal architecture or configuration of the circuit modules of this known telephone set, i.e. the way wherein the circuit modules thereof are interconnected, is suitably adapted to the application wherein the telephone set is actually used, it may be that for another possible telecommunication application another configuration of the circuit modules is required. This is for instance the case if, for any reason, no voice needs to be transmitted but that the two B-channels will both be used for transmitting data signals. The audio circuit is then no more necessary, whilst a second data terminal adapter is required. Another possible change of configuration is that the echo canceller must only be activated when the hands-free facility is used and deactivated when this facility is not used. This change of configuration may lead to difficulties especially when a circuit module which is formerly connected in series with other circuit modules has to be disconnected, i.e. deactivated, or when it has to be connected in parallel with this series connection.

When the above or other changes of configuration are required, the hardware of the digital telephone set needs generally to be upgraded or the telephone set itself needs to be replaced.

An object of the present invention is to provide a digital telephone set of the above mentioned type but wherein the internal configuration of its circuit modules may be modified according to the telecommunication application wherein it is used, i.e. that a same digital telephone set may be used for different telecommunication applications.

According to the invention, this object is achieved due to the fact that said digital telephone set further includes a common information data bus to which said circuit modules are connected and which carries said telephonic information data in time division multiplexed channels of time frames, said circuit modules including input/output means adapted to read/write allocated channels.

In this way, when telephonic information data has to be transferred from a first to a second circuit module, both the first and the second circuit modules use a same channel, the first module for writing its information data therein and the second module for reading this information data thereof. Such a single write/read allocated channel is thus used for a single inter-module transfer of information data, i.e. for one write and for one read operation. By extension, different channels are used for different inter-module transfers and these modules may then for instance be seen as connected in series. On the other hand, if a same channel is read by two distinct circuit modules, the inputs means of these modules may be seen as connected in parallel. Obviously more than one channel may be used for a same write/read operation allowing thus a higher amount of information data to be transferred between circuit modules. Conversely, when a module has no allocated channels, this module is deactivated.

From the above it follows that by changing the channels used by the different circuit modules for their write and read operations it is possible to modify the internal configuration of the digital telephone set. As a result, a same digital telephone set may be used for different telecommunication applications.

Another characteristic feature of the present digital telephone set is that said circuit modules are further connected to a microprocessor adapted to indicate to the input/output means of each of said circuit modules which channels are allocated thereto.

In this way, both the identity of the channel, e.g. the position of this channel in the frame, and the number of channels allocated to each circuit module is controlled by the microprocessor. It is thus possible to change, via the microprocessor, the internal configuration of the circuit modules of the digital telephone set without modifying any hardware thereof. This can be done either automatically if the microprocessor is programmed accordingly or manually by an operator. It is further also possible to give some priority to the operations of particular circuit modules, e.g. to the audio circuit for ensuring the transfer of the voice signals within a predetermined time interval. Furthermore, a circuit module, e.g. the echo canceller, is activated when the hands-free facility is used and one or more channels are then allocated thereto, whilst the echo canceller is deactivated when this facility is no more used, no channel being then allocated thereto.

If the microprocessor is connected to the circuit modules via the common information data bus, it is possible to transmit the above channel allocations via the channels of this information data bus. However, in that case some timing constraints are imposed to the microprocessor which has to send its control data, e.g. the channel allocations, in predetermined channels of the time frames, i.e. at predetermined time intervals.

A further object of the present invention is to allocate the above read/write channels to the circuit modules without imposing transmission time constraints on the microprocessor.

Also according to the present invention, this further object is achieved according to the fact that said microprocessor is connected to said circuit modules via a control data bus which carries control data indicative of said channel allocations.

In this preferred embodiment the microprocessor is free to transmit at any moment its control data to the circuit modules.

Also another characteristic feature of the present invention is that said circuit modules are integrated in an electronic chip.

Still another characteristic feature of the present invention is that said common information data bus is a one-wire data bus.

The space occupied by this common one-wire data bus running all over the electronic chip and carrying the Time Division Multiplexed (TDM) telephonic information data in channels is much lower than that occupied by any multi-wire data bus generally used on such a chip for performing a similar operation. It can further also be proved that the input/output means needed in each circuit module to read/write the telephonic information data of the TDM channels of the time frames use less space on the chip than the above multi-wire bus or busses.

The present invention is further also characterized in that said input/output means includes a channel identification means adapted to identify the channel actually on said common information data bus and comparator means adapted to compare the actual channel's identity with the identity of a channel allocated to the circuit module to which said input/output means belong, this allocated channel identity being received in said comparator means from said microprocessor via said control data bus and said comparator means controlling gate means coupling said circuit module to said common information data bus upon matching of said channel identities.

In more detail, said channel identification means is a counter controlled by a clock signal and by a time frame signal synchronized to said clock signal, and said channel identity is indicated by the number of clock pulses separating a frame pulse of said frame signal and the first clock pulse of said channel.

The above mentioned and other objects and features of the invention will become more apparent and the invention itself will be best understood by referring to the following description of an embodiment taken in conjunction with the accompanying drawings wherein :
Fig. 1 shows a transmission circuit DPI of a digital telephone set according to the present invention;
Figs. 2 and 3 are schematic representations of two different configurations of the circuit modules of the transmission circuit DPI of Fig. 1;
Figs. 4a and 4b represent Time Division Multiplexed (TDM) channels used on the information data bus TDB of the DPI shown in Fig. 1; and
Fig. 5 shows an input/output circuit 10 used in the circuit modules of the transmission circuit DPI of Fig. 1.

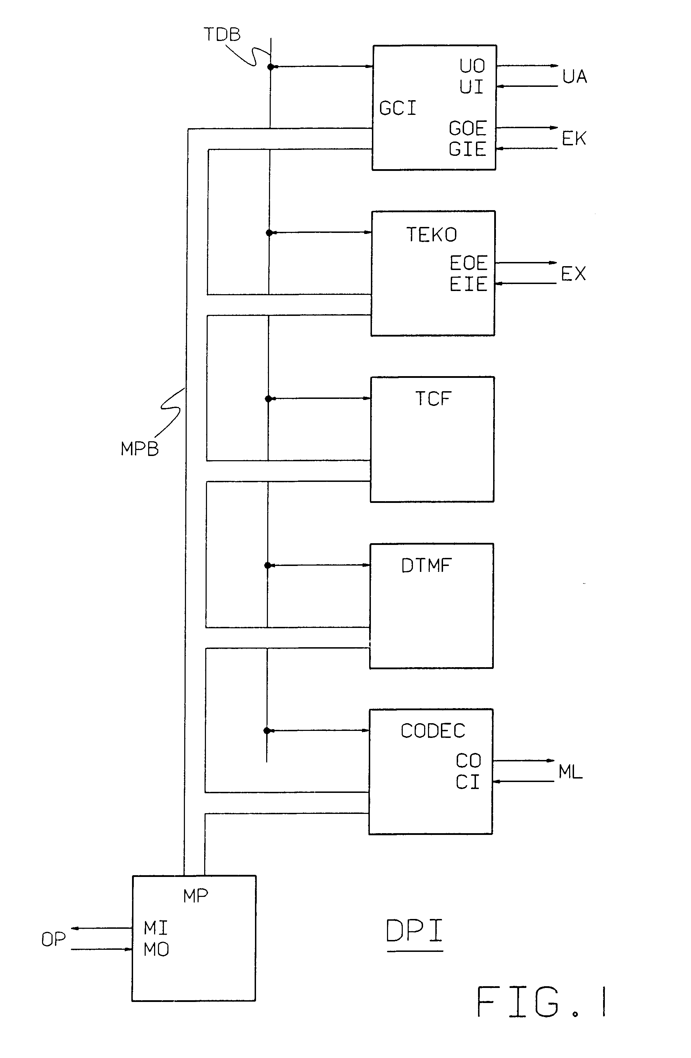

The circuit shown in Fig. 1 is a transmission circuit called Digital Phone Interface DPI and is used in a digital telephone set which is connected to a digital telecommunication network via a UA256 serial link or telecommunication line UA. The transfer of data on this line UA is synchronized in time frames of 125 /1.sec and is divided in two phases: transmission and reception. Each phase of this so-called "ping-pong data transfer" starts with a synchronization bit or frame pulse followed by 4 time channels of 8 serially transferred bits each. The user data rate is 64 Kbit/s, whilst the real line data rate is 682.7 Kbit/s. From the four channels, a first one is used to transfer control signals, a second one is used to transfer voice signals and the two remaining ones are free. Preferably one of these two free channels is used to transfer telephonic data signals.

Additionally to the classical microphone and earphone (not shown) present in most telephone sets, the present digital telephone set includes a second microphone and a loudspeaker (also not shown) allowing to use this set in a so-called "hands-free" mode, i.e. without using the handset. The telephone set further also includes an echo canceller circuit (not shown) which removes echo signals appearing for instance when the hands-free facility is used. These echo signals are voice signals coming from the loudspeaker and which are picked-up by one of the microphones.

The transmission circuit DPI is integrated in a chip according to the 1.2 micron technology. DPI has external terminals Cl, CO, EIE, EOE, GIE, GOE, Ul, UO, MI and MO of which the functions will be described below and includes an audio circuit CODEC, a Dual Tone Multi-Frequencies generator DTMF, a Pulse Coded Modulation (PCM) transcoder TCF, an echo canceller interface TEKO and a line interface GCI. These circuits can be seen as circuit modules which are all connected to a one-wire information data bus TDB and to a multi-wire control data bus MPB. The latter is further connected to a microprocessor MP which also integrated in the same chip.

The audio circuit CODEC has the external input terminal CI and the external output terminal CO both connected to the above microphones, earphone and loudspeaker generally indicated by ML in Fig. 1. On the one hand, CODEC transforms the analog voice signals received via the microphone-(s) into digital voice signals adapted to be transmitted to other circuit modules of the DPI via the one-wire information data bus TDB as will be explained later. On the other hand, CODEC transforms either digital voice signals received from the data bus TDB or digital dual tone multi-frequencies signals from the dual tone multi-frequencies generator DTMF into analog audible signals transmitted to the user via the earphone and/or via the loudspeaker. CODEC further includes other circuits, e.g. an amplifier circuit, an anti-distortion circuit and an anti-Larsen circuit, which are necessary for obtaining a suitable transmission quality of the audible signals, the latter being generally referred to as voice signals.

The dual tone multi-frequencies generator DTMF generates dual tone digital signals having two frequencies as commonly used in telecommunication networks for selecting the destination of a communication. These dual tone signals are is the audio frequency range and are transmitted, via the PCM transcoder TCF, to the telecommunication line UA, as well as, via the audio circuit CODEC, to the earphone/loudspeaker of ML wherein they can be heard.

The Pulse Coded Modulation (PCM) transcoder TCF is adapted to translate a compressed PCM word into a linear PCM word according either to the A-law or to the a-law, and vice versa, as recommended by the CCITT organisation. A detailed description of such a transcoder used in a telecommunication network may be found in the Belgian Patent BE-897.773.

It is to be noted that the use of the above PCM transcoder TCF operating according to the A-law or the u-law is given here as an example but that other coding scheme are also possible.

The echo canceller interface TEKO has the external input terminal EIE and the external output terminal EOE. Both these terminals may be connected either to the external echo canceller circuit mentioned above or to an external second audio circuit similar to the CODEC. This external circuit is generally indicated by EX in Fig. 1. The purpose of TEKO is to transform the signals of the one-wire data bus TDB into serial or parallel signals compatible with those handled by the external circuit EX connected thereto, and vice versa.

The line interface GCI has the external input terminals UI and GIE and the external output terminals UO and GOE. The terminals UI and UO are connected to the transmission line UA, whilst the terminals GIE and GOE may be connected to the above echo canceller circuit as generally indicated by EK. GCI is adapted to interface the external signals of the above transmission line UA with those either of the echo canceller circuit EK or of the one-wire data bus TDB.

The microprocessor MP is provided with the external terminals MI and MO via which an operator, generally indicated by OP, may control MP. The latter exchanges control data and addresses with the above other circuit modules of DPI via the multi-wire control data bus MPB.

All these circuit modules CODEC, DTMF, TCF, TEKO, GCI and MP are not described in more detail here since they are already individually known in the art.

The one-wire information data bus TDB carries telephonic information data exchanged between the circuit modules in Time Division Multiplexed (TDM) channels of time frames. TDB operates with 32 channels of 8 bits each and at a rate of 2 Mbit/s. The channel(s) wherein a circuit module is allowed to write its information data and the channel(s) wherefrom this module may read information data are allocated to each distinct module by the microprocessor MP via the control data bus MPB. Although the operator MP is allowed to update the channel allocations initially set by the microprocessor MP, the latter is programmed to inhibit inadequate channel allocations in order to ensure at least the transfer of data having priority on the data bus TDB. This is for instance the case of voice signals which have always to be transmitted within a predetermined time interval.

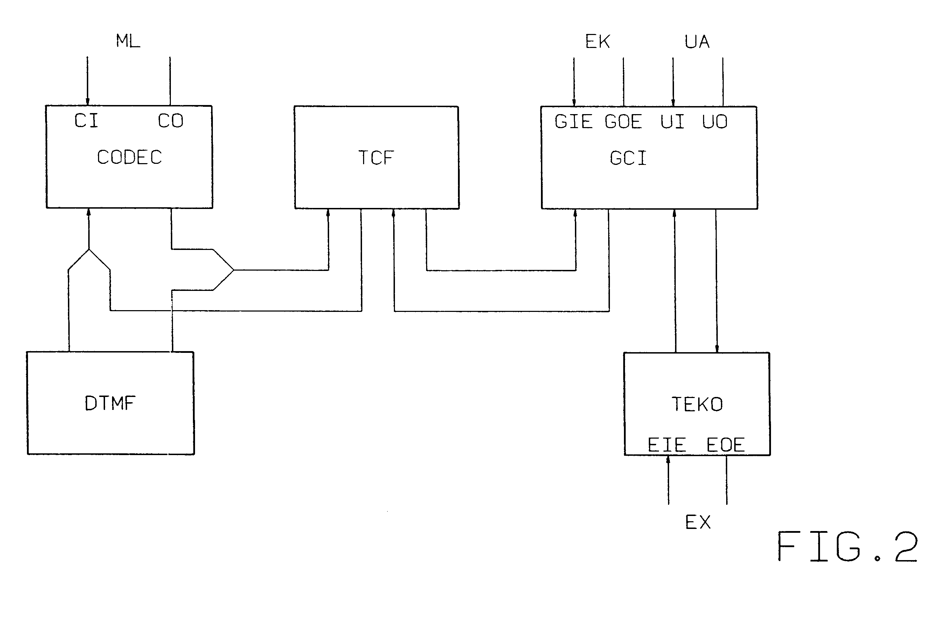

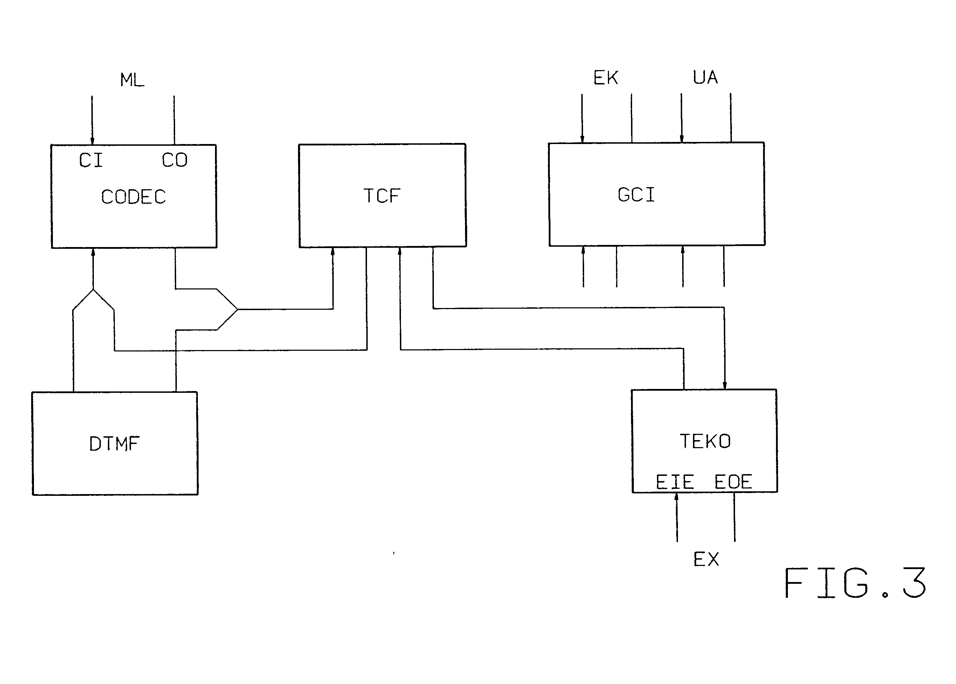

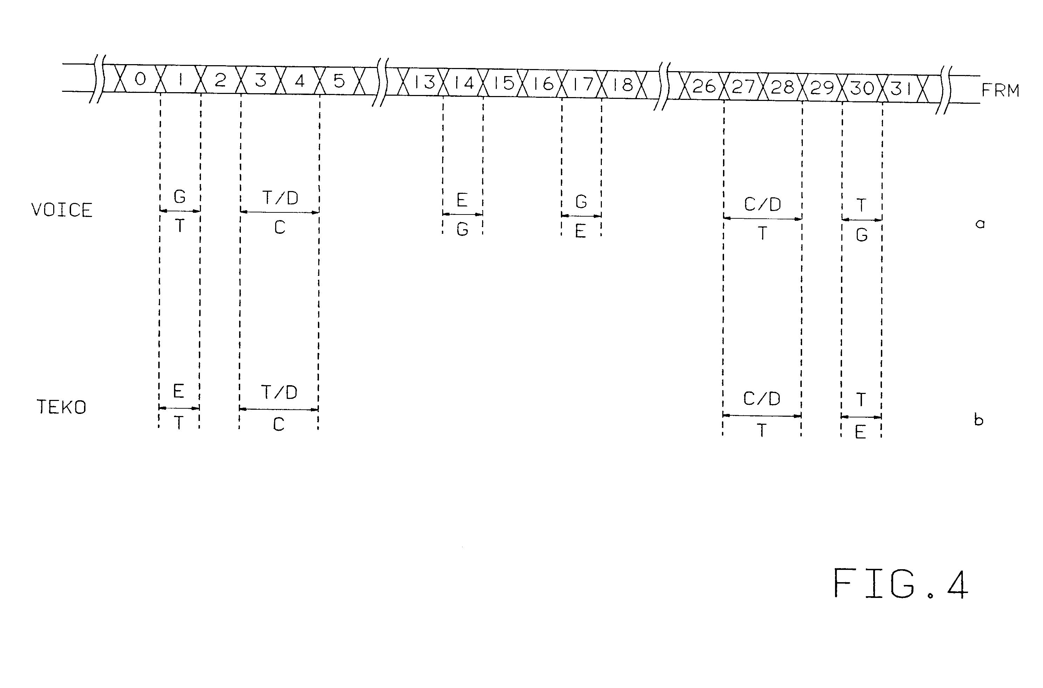

The one-wire information data bus TDB allows to achieve different internal architecture or configurations of the above circuit modules of the digital telephone set, i.e. different ways wherein the circuit modules thereof are interconnected. Two such configurations are shown in the Figs. 2 and 3 and will be described below in relation with Fig. 4.

Fig. 2 schematically represents a configuration wherein the digital telephone set operates in a so-called "voice mode". In this configuration voice signals are transferred from the microphone of ML to the line UA via the CODEC, the TCF and the GCI circuit modules, and inversely from the line UA to the earphone of ML via the same modules. To this end, the voice signals are transmitted as telephonic information data signals from CODEC to TCF and from TCF to GCI and, in the other direction, from GCI to TCF and from TCF to CODEC. Additionally, the dual tone signals which are also telephonic information data are transmitted from DTMF to both TCF and CODEC. It is to be noted that in this voice mode configuration it is possible to connect a second audio circuit EX, similar to CODEC, to the telephone set via the external terminals EIE and EOE of the echo canceller interface TEKO. The resulting additional voice signals are then internally transferred in both directions between TEKO and GCI.

As already mentioned, the signals transferred between the circuit modules are loaded on channels of time frames such as FRM which is schematically represented in Fig.4. The present example of voice mode configuration is more particularly shown in Fig. 4a and, as can be seen, only the channels numbered 1, 3, 4, 14, 17, 27, 28 and 30 of the 32 channels of the time frame FRM are used. These used channels are shown with arrows and the code letter(s) mentioned above the arrow indicate(s) the transmitting circuit module(s), i.e. the module(s) which write(s) on the channel(s), whilst the code letter below the arrow indicates the receiving circuit module, i.e. the module which read from the channel. The code letters C, D, T, E and G are respectively used for indicating the circuit modules CODEC, DTMF, TCF, TEKO and GCI.

In more detail, the channel number 1 of FRM is used by GCI and by TCF. GCI writes [G] its 8 bit output signals to this channel 1, whilst TCF reads [T] its 8 bit input signals from this same channel 1. GCI and TCF may thus be considered as connected in series. Similarly, the channels 3 and 4 are used together for the transfer of 16 bit signals from both TCF and DTMF [T/D] to CODEC [C]. The channel 14 and the channel 17 are used for transferring 8 bit signals from TEKO [E] to GCI [G] and vice versa respectively. The channels 27 and 28 are used together for the transfer of 16 bit signals from both CODEC and DTMF [C/D] to TCF [T]. Finally, the channel 30 is used for transferring 8 bit signals from TCF [T] to GCI [G].

Reference is now made to the Figs. 3 and 4b which schematically represents another configuration wherein the digital telephone set operates in a so-called "teko mode". In this teko mode the digital telephone set is used as an hands-free set, i.e. that the loudspeaker is used instead of the earphone. As already mentioned above, an external echo canceller circuit needs then to be used (activated) to remove possible echo signals. This external echo canceller circuit EX-EK is inserted in series between the TCF and GCI. To this end, the telephonic information data signals are still transmitted from both CODEC and DTMF to TCF and from both TCF and DTMF to CODEC as in the above voice mode configuration, but the other interconnections of this latter configuration are now replaced by a bidirectional link between TCF and TEKO instead of the former links between both TCF/TEKO and GCI. In this teko mode configuration the echo canceller circuit EX-EK is connected between the external terminals EIE and EOE of TEKO and the external terminals GIE and GOE of GCI. At the exception of channels 14 and 17 which are no more required, the same channels as for the voice mode configuration are used. The channels 3 and 4 are still allocated to the transfer of signals from both TCF and DTMF to CODEC and the channels 27 and 28 are still allocated to the transfer of signals from both CODEC and DTMF to TCF. However, the channel 1 is now used for transferring data from TEKO [E] to TCF [T], whilst the channel 30 is allocated to the transfer of data from TCF to TEKO.

It appears thus from the above two examples of possible configurations that any interconnections of the circuit modules of the DPI are possible. This means that the circuit modules may be connected in series, in parallel or in series/parallel and that they can individually be activated or deactivated. Any such configuration can further easily be changed by simply changing the channels allocated to the write and read operations of the circuit modules.

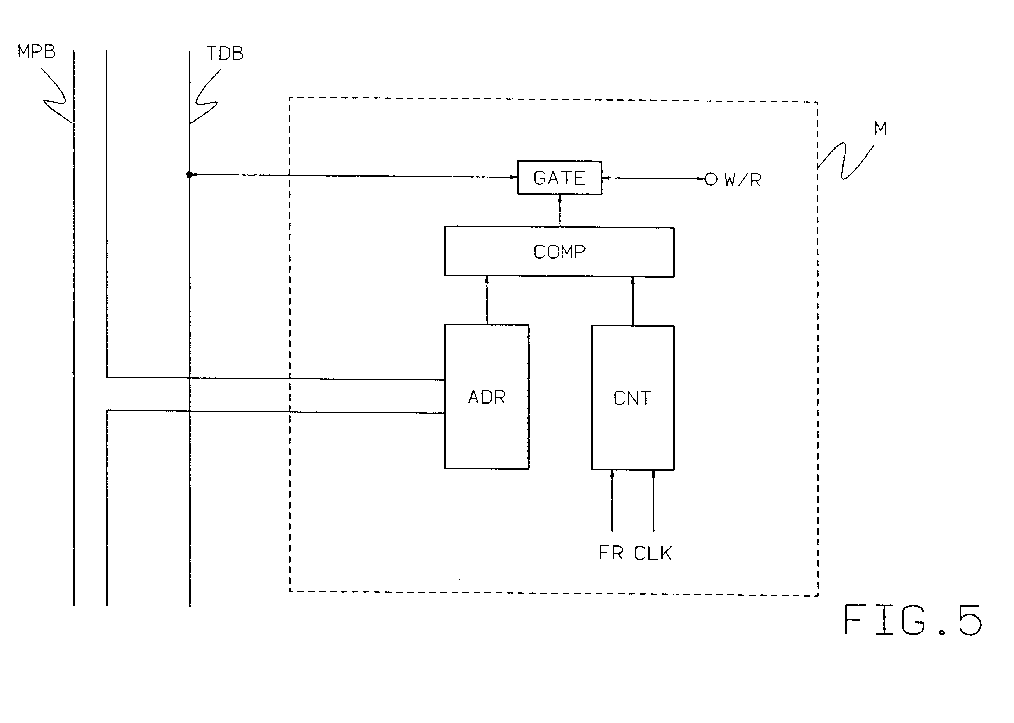

In order to write signals on and/or to read signals from the TDM channels allocated to the circuit modules and transmitted on the one-wire information data bus TDB, each circuit module of the digital phone interface DPI is provided with an input/output circuit 10 as shown in Fig. 5. Therein, a circuit module is generally indicated by M and has a write/read terminal W/R through which it can exchange signals with channels of the data bus TDB. The terminal W/R is connected to the data bus TDB via a gate circuit GATE controlled by a comparator COMP also forming part of the input/output circuit 10. The 10 further includes a counter CNT controlled by a clock signal CLK and a frame signal FR both also controlling the data bus TDB. This counter CNT is used to identify the channel which is actually processed on the data bus TDB. To this end, CNT is reset at each occurrence of a frame pulse of FR and counts then the number of clock pulses following this frame pulse. As a result, CNT can determine the beginning of a channel, i.e. its first pulse, only by knowing its length, i.e. the number of bits carried by each TDM channel. Each time a channel is so identified, i.e. starts, its channel number or identity is indicated to the comparator COMP to a first input of which CNT is connected. The input/output circuit 10 further also includes an address decoder ADR controlled by the microprocessor MP via the control data bus MPB and of which an output is connected to a second input of COMP. The address decoder ADR receives from MP the number or identity of the channels allocated to the circuit module M to which 10 belongs. This number is then communicated to COMP which compares it with the number of the channel actually processed and received from CNT. Upon matching of these two channel numbers, COMP closes the gate circuit GATE allowing so the circuit module M to write data to or read data from the common data bus TDB.

While the principles of the invention have been described above in connection with specific apparatus, it is to be clearly understood that this description is made only by way of example and not as a limitation on the scope of the invention.

## Claims

1. Digital telephone set including a plurality of interconnected circuit modules each performing a specific telephonic operation on telephonic information data, characterized in that said digital telephone set further includes a common information data bus (TDB) to which said circuit modules are connected and which carries said telephonic information data in time division multiplexed channels of time frames, said circuit modules including input/output means (10) adapted to read/write allocated channels.

2. Digital telephone set according to claim 1, characterized in that said circuit modules are further connected to a microprocessor (MP) adapted to indicate to the input/output means (10) of each of said circuit modules which channels are allocated thereto.

3. Digital telephone set according to claim 2, characterized in that said microprocessor (MP) is connected to said circuit modules via a control data bus (MPB) which carries control data indicative of said channel allocations.

4. Digital telephone set according to claim 1, characterized in that said circuit modules are integrated in an electronic chip.

5. Digital telephone set according to claim 1, characterized in that said common information data bus (TDB) is a one-wire data bus.

6. Digital telephone set according to claim 3, characterized in that said input/output means (10) includes a channel identification means (CNT) adapted to identify the channel actually on said common information data bus (TDB) and comparator means (COMP) adapted to compare the actual channel's identity with the identity of a channel allocated to the circuit module to which said input/output means belong, this allocated channel identity being received in said comparator means from said microprocessor (MP) via said control data bus (MPB) and said comparator means controlling gate means (GATE) coupling said circuit module to said common information data bus upon matching of said channel identities.

7. Digital telephone set according to claim 6, characterized in that said channel identification means (CNT) is a counter controlled by a clock signal (CLK) and by a time frame signal (FR) synchronized to said clock signal, and that said channel identity is indicated by the number of clock pulses separating a frame pulse of said frame signal and the first clock pulse of said channel.

8. Digital telephone set according to claim 1, characterized in that one of said modules is an audio circuit (CODEC) adapted to perform a digital-analog conversion of voice signals.

9. Digital telephone set according to claim 1, characterized in that one of said circuit modules is a transcoder (TCF) adapted to translate a compressed Pulse Coded Modulated word into a linear Pulse Coded Modulated word according to the A-law or to the a-law.

10. Digital telephone set according to claim 1, characterized in that one of said modules is a line interface (GCI) to convert said serial time division multiplexed channels of said common information data bus (TDB) into signals adapted to be transmitted on a multi-channel telecommunication line (UA).
